# EUROPEAN PATENT SPECIFICATION

(11) **EP 2 692 557 B1**
(45) Date of publication and mention of the grant of the patent: **07.02.2018**
(21) Application number: 12764755.0
(22) Date of filing: 27.03.2012
(51) Int. Cl.: B60H 1/00, B60H 1/32, B60H 1/03

(54) **VEHICLE AIR CONDITIONING DEVICE**
KLIMAANLAGEVORRICHTUNG FÜR FAHRZEUGE
CLIMATISATION DE VÉHICULE

(30) Priority: 29.03.2011 JP 2011072038
(43) Date of publication of application: 05.02.2014
(73) Proprietor: Panasonic Intellectual Property Management Co., Ltd., Osaka-shi, Osaka 540-6207 (JP)
(72) Inventor: TANIGUCHI, Katsuji, Osaka 540-6207 (JP); TERADA, Tomohiro, Osaka 540-6207 (JP)
(74) Representative: Schwabe - Sandmair - Marx
(86) International application number: PCT/JP2012/002106
(87) International publication number: WO 2012/132402

(56) References cited:
- DE-C1- 19 731 369
- JP-A- 5 147 423
- JP-A- 11 170 841
- JP-A- 57 138 413
- JP-A- 2000 280 724
- JP-A- 2000 318 422
- JP-U- 62 162 110
- US-A- 4 412 425
- US-A1- 2005 230 096

## Description

### Technical Field

The present invention relates to a vehicle air conditioning apparatus to be installed in a vehicle such as an electric vehicle, for example.

### Background Art

Heretofore, a vehicle air conditioning apparatus has been known which reduces a heat load in temperature control inside a passenger compartment by exchanging heat between outside air taken in from the outside of the passenger compartment and inside air within the passenger compartment to make the outside air closer to the temperature and humidity inside the passenger compartment and then introducing the outside air into a duct (see, Patent Literature (hereinafter, referred to as "PTL") 1, for example).

Specifically, driving a fan causes inside air to be introduced into a duct through an inside air inlet while causing outside air to be introduced into the duct through an outside air inlet after the outside air passes through an inside and outside air heat exchanger in the vehicle air conditioning apparatus of PTL 1, Some of a mixture of the outside air and inside air introduced into the duct passes through a cooling heat exchanger in the duct and is thus cooled, and then passes through a heating heat exchanger in the duct to be increased in temperature and is then blown into the passenger compartment. Meanwhile, some of the mixture is subjected to heat exchange with outside air by the inside and outside heat exchanger, and is discharged thereafter to the outside of the passenger compartment through a mixture outlet.

### Citation List

### Patent Literature

PTL 1 Japanese Patent Application Laid-Open No. 2000-272326

Document US 2005/0230096A1 discloses a vehicle air conditioning apparatus according to the preamble of claim 1.

### Summary of Invention

### Technical Problem

PTL 1, however, has a problem in that a sufficient heat exchange amount cannot be secured because heat is exchanged between a mixture of inside air introduced through an inside air inlet and outside air introduced through an outside air inlet, and outside air. In addition, the amount of outside air in the mixture increases with an increase in the amount of outside air to be introduced, so that the heat exchange amount further decreases. Accordingly, when air conditioning is to be performed using only the outside air introduced from the outside, there arises a problem in that not only the heat exchange amount decreases but also the system can no longer serve as an air conditioning system.

It is an object of the present invention to provide a vehicle air conditioning apparatus capable of reducing power consumption of the air conditioning apparatus by sufficiently reducing a temperature difference between the outside air introduced through the outside air inlet and the inside air introduced through the inside air inlet and thereby increasing a heat exchange amount between the inside air and the outside air in the heat exchanger.

### Solution to Problem

A vehicle air conditioning apparatus according to the present invention includes: an outside air inlet through which outside air is introduced from outside of a passenger compartment; an inside air inlet through which inside air is introduced from inside of the passenger compartment; a heat exchanger that exchanges heat between inside air introduced through the inside air inlet and outside air introduced through the outside air inlet; a blower fan that blows outside air which has been subjected to heat exchange by the heat exchanger, or outside air introduced through the outside air inlet, or inside air introduced through the inside air inlet; an evaporator that cools outside air or inside air blown by the blower fan; and a condenser that heats the outside air or inside air cooled by the evaporator and sends the heated outside air or inside air toward the inside of the passenger compartment, in which: a first flow passage is formed through which outside air or inside air flows in the order of the blower fan, the evaporator, the condenser, and the inside of the passenger compartment; a second flow passage is formed which is separated from the first flow passage, and through which inside air flows in the order of the inside air inlet, the heat exchanger, and the outside of the passenger compartment; and the heat exchanger exchanges heat between outside air introduced through the outside air inlet by suction power of the blower fan, and inside air introduced into the second passage after passing through the first passage and the inside of the passenger compartment by a blowing force of the blower fan, and discharges inside air which has been subjected to heat exchange to the outside of the passenger compartment by using a drain hose provided for discharging drain water to the outside of the passenger compartment, the drain water being generated when outside air is cooled by the evaporator.

### Advantageous Effect of Invention

Power consumption of an air conditioning apparatus can be reduced by sufficiently reducing a temperature difference between the outside air introduced through an outside air inlet and the inside air introduced through an inside air inlet and thereby increasing a heat exchange amount between the inside air and the outside air in a heat exchanger.

### Brief Description of Drawings

FIG. 1 is a diagram illustrating a configuration of a vehicle air conditioning apparatus according to Embodiment 1 not according to the present invention; and
FIG. 2 is a diagram illustrating a configuration of a vehicle air conditioning apparatus according to Embodiment 2 of the present invention.

### Description of Embodiments

Hereinafter, embodiments will be described in detail with reference to the drawings.

### (Embodiment 1)

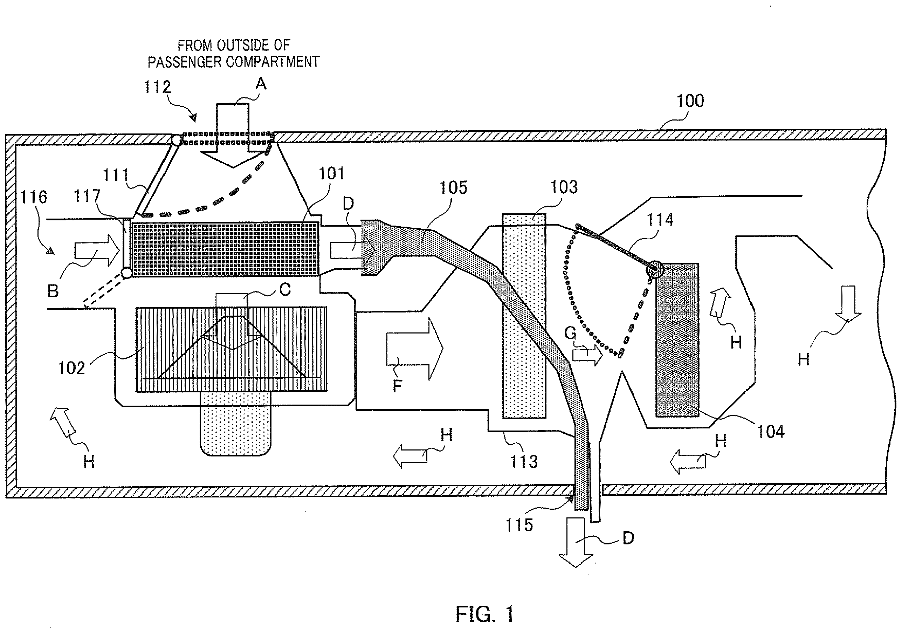

FIG. 1 is a block diagram illustrating a configuration of vehicle air conditioning apparatus 100 according to Embodiment 1 not according to the present invention. Vehicle air conditioning apparatus 100 is configured to perform heating in a passenger compartment by collecting the heat of outside air, which is a so-called heat pump air conditioning apparatus for vehicles.

Sensible heat exchanger 101 (corresponds to heat exchanger) takes in outside air A from the outside of the passenger compartment through outside air inlet 112 and also takes in inside air B inside the passenger, compartment. Sensible heat exchanger 101 exchanges heat between the inside air and outside air, which have been introduced into sensible heat exchanger 101, to make the outside air closer to the temperature inside the passenger compartment. Sensible heat exchanger 101 supplies blower fan 102 with outside air C, which has been subjected to heat exchange, and also discharges inside air D which has been subjected to heat exchange to the outside of the passenger compartment.

Blower fan 102 introduces outside air C, which has been subjected to the heat exchange in sensible heat exchanger 101, into air conditioning duct 113. In addition, blower fan 102 introduces inside air B in the passenger compartment into air conditioning duct 113. Note that, outside air C may be a mixture of air that has passed through sensible heat exchanger 101, and bypassed air that has not passed through sensible heat exchanger 101.

Evaporator 103 cools air F by exchanging heat between air F introduced into air conditioning duct 113 by blower fan 102, and refrigerant. Air F cooled by evaporator 103 is supplied to condenser 104. In this processing, when outside air inlet 112 is opened by door 111 while the flow passage from inside air inlet 116 to blower fan 102 is closed by mix door 117, only the outside air is cooled by evaporator 103. Meanwhile, when outside air inlet 112 is closed by door 111 while the flow passage from inside air inlet 116 to blower fan 102 is opened by mix door 117, only the inside air is cooled by evaporator 103.

Condenser 104 raises the temperature of air G by heat exchange between air G cooled by evaporator 103, and refrigerant. In addition, air H with the temperature raised by condenser 104 is introduced inside the passenger compartment. Air H introduced inside the passenger compartment by condenser 104 becomes inside air B, and the flow rate of inside air B is adjusted by mix door 117, and inside air B is then introduced into at least one of air conditioning duct 113 and sensible heat exchanger 101. Note that, condenser 104 is provided with mix door 114, and some of air G cooled by evaporator 103 is introduced inside the passenger compartment by adjustment of the aperture of mix door 114 without passing through condenser 104.

Discharge hose 105 has one end connected to the outlet for the inside air of sensible heat exchanger 101 and the other end protruding from the passenger compartment through opening 115 provided to vehicle air conditioning apparatus 100. With this configuration, discharge hose 105 discharges the inside air which has been subjected to heat exchange by sensible heat exchanger 101 to the outside of the passenger compartment.

Outside air inlet 112 is provided with door 111. During an outside air introducing operation, door 111 opens and outside air inlet 112 is in communication with the outside of the passenger compartment, which allows outside air A to be taken in the passenger compartment through outside air inlet 112. During an inside air circulating operation, door 111 is closed, which prevents outside air A from being taken in through outside air inlet 112. Note that, the term "outside air introducing operation" refers to a state where cooling and heating is performed in the passenger compartment by using a mixture of outside air and inside air or only outside air, and the term "inside air circulating operation" refers to a state where cooling and heating is performed in the passenger compartment by using only inside air.

Inside air inlet 116 is provided with mix door 117. The degree of mixture between outside air and inside air during the outside air introducing operation is adjustable by adjustment of the aperture of mix door 117. Note that, mix door 117 is closed during the inside air circulating operation (this state of mix door 117 is illustrated with solid line in FIG. 1), so that inside air B is all supplied to air conditioning duct 113 during the inside air circulating operation.

In vehicle air conditioning apparatus 100 having the above described configuration, a first flow passage is formed through which air flows in the order of blower fan 102, evaporator 103, condenser 104, and the inside of the passenger compartment, and a second passage is formed through which air flows in the order of inside air inlet 116, heat exchanger 101, and the outside of the passenger compartment.

As described above, in Embodiment 1, sensible heat exchanger 101 exchanges heat between outside air A not mixed with inside air B, and inside air B. Thus, a temperature difference between outside air A and inside air B can be sufficiently secured, which makes it possible to increase the heat exchange amount between outside air A and inside air B. Accordingly, it is possible to reduce the heat load of the air conditioning apparatus and also to reduce power consumption thereof.

### (Embodiment 2)

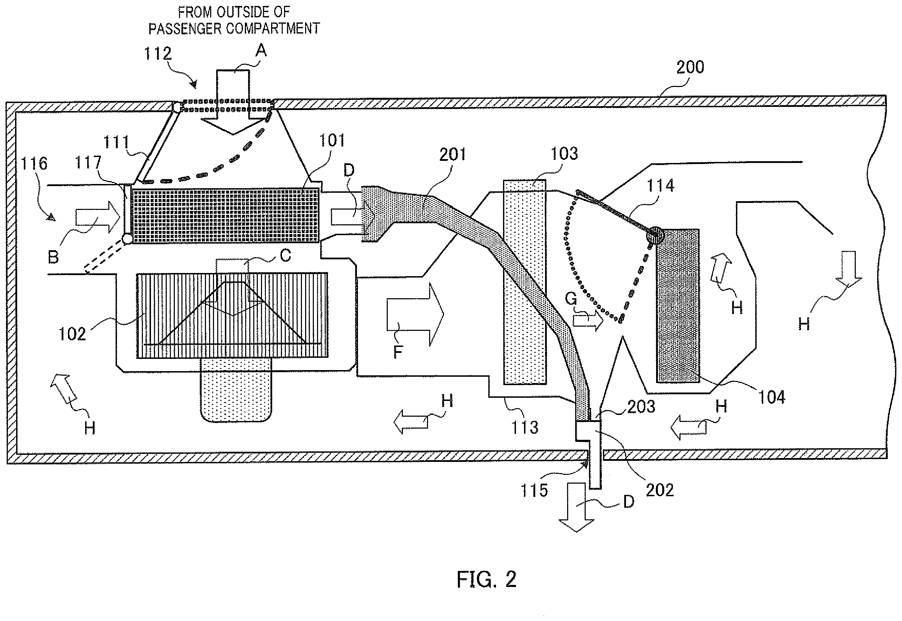

FIG. 2 is a diagram illustrating a configuration of vehicle air conditioning apparatus 200 according to Embodiment 2 according to the invention. In Embodiment 2, inside air D, which has been subjected to heat exchange with outside air by sensible heat exchanger 101, is discharged to the outside of the passenger compartment by using a simple structure.

Vehicle air conditioning apparatus 200 according to Embodiment 2 includes discharge hose 201 in place of discharge hose 105 in vehicle air conditioning apparatus 100 according to Embodiment 1 illustrated in FIG. 1. Note that, in FIG. 2, the same reference numerals are used for denoting the same components in FIG. 1, and any duplicate description thereof is omitted.

Discharge hose 201 has one end connected to an outlet for inside air of sensible heat exchanger 101 and the other end connected to drain hose 202. With this configuration, discharge hose 201 discharges the inside air which has been subjected to heat exchange by sensible heat exchanger 101 to the outside of the passenger compartment through drain hose 202. Drain hose 202 is mainly provided for collecting moisture generated during heat exchange between inside air and refrigerant in evaporator 103 and for discharging the moisture to the outside of the passenger compartment.

Drain hose 202 has one end connected to outlet 203 for drain water, which is formed at a bottom part of air conditioning duct 113, and the other end protruding from the passenger compartment through opening 115 provided at a bottom part of vehicle air conditioning apparatus 200. With this configuration, drain hose 202 discharges drain water discharged through outlet 203 and inside air discharged through discharge hose 201 to the outside of the passenger compartment.

As described above, according to Embodiment 2, inside air is discharged from the sensible heat exchanger by using a drain hose provided for discharging drain water to the outside of the passenger compartment. Accordingly, it is not necessary to provide an outlet for discharging inside air to the outside of the passenger compartment in Embodiment 2. Accordingly, in addition to the effects obtained in Embodiment 1, it is possible to obtain a simplified structure of the air conditioning apparatus in Embodiment 2.

Note that, although sensible heat exchanger 101 is provided in Embodiments 1 and 2, the present invention is not limited to this configuration, and a total heat exchanger may be used instead of sensible heat exchanger 101. However, use of a sensible heat exchanger is advantageous in preventing windows from being fogged up in the passenger compartment. This is because, unlike a total heat exchanger, a sensible heat exchanger exchanges only the heat amount and does not exchange latent heat (moisture).

### Industrial Applicability

The vehicle air conditioning apparatus according to the present invention is favorable as an air conditioning apparatus to be installed in vehicles such as electric vehicles, for example.

### Reference Signs List

100 Vehicle air conditioning apparatus
101 Sensible heat exchanger
102 Blower fan
103 Evaporator
104 Condenser
105 Discharge hose
111, 114, 117, Mix door
112 Outside air inlet
113 Air conditioning duct
115 Opening
116 Inside air inlet

## Claims

1. A vehicle air conditioning apparatus (200) comprising:
an outside air inlet (112) through which outside air is introduced from outside of a passenger compartment;
an inside air inlet (116) through which inside air is introduced from inside of the passenger compartment;
a heat exchanger (101) that exchanges heat between inside air introduced through the inside air inlet and outside air introduced through the outside air inlet;
a blower fan (102) that blows outside air which has been subjected to heat exchange by the heat exchanger, or outside air introduced through the outside air inlet, or inside air introduced through the inside air inlet;
an evaporator (103) that cools outside air or inside air blown by the blower fan; and
a condenser (104) that heats the outside air or inside air cooled by the evaporator and sends the heated outside air or inside air toward the inside of the passenger compartment, wherein:
a first flow passage is formed through which outside air or inside air flows in the order of the blower fan, the evaporator, the condenser, and the inside of the passenger compartment;
a second flow passage is formed which is separated from the first flow passage, and through which inside air flows in the order of the inside air inlet, the heat exchanger, and the outside of the passenger compartment; and
the heat exchanger (101) exchanges heat between outside air introduced through the outside air inlet by suction power of the blower fan, and inside air introduced into the second passage after passing through the first passage and the inside of the passenger compartment by a blowing force of the blower fan, **characterized in that**
the blower fan discharges inside air which has been subjected to heat exchange to the outside of the passenger compartment by using a drain hose (202) provided for discharging drain water to the outside of the passenger compartment, the drain water being generated when outside air is cooled by the evaporator.

2. A vehicle air conditioning apparatus according to claim 1, wherein the heat exchanger (101) is a sensible heat exchanger.

3. A vehicle air conditioning apparatus according to one of claims 1 to 2, further comprising a discharge hose (201) that has one end connected to an outlet for the inside air of the heat exchanger and has another end connected to the drain hose, wherein the inside air (D) which has been subjected to heat exchange by the heat exchanger is discharged to the outside of the passenger compartment through the discharge hose (201) and the drain hose (202).

4. A vehicle comprising the vehicle air conditioning apparatus (200) according to one of claims 1 to 3.

## Patentansprüche

1. Fahrzeug-Klimaanlage (200), umfassend:
einen Außenlufteinlass (112), durch den Außenluft von außerhalb eines Insassenraums eingeführt wird;
einen Innenlufteinlass (116), durch den Innenluft von innerhalb eines Insassenraums eingeführt wird;
einen Wärmetauscher (101), der Wärme zwischen Innenluft, die durch den Innenlufteinlass eingeführt wird, und Außenluft, die durch den Außenlufteinlass eingeführt wird, austauscht;
ein Gebläse (102), das Außenluft, die durch den Wärmetauscher einem Wärmeaustausch unterzogen wurde, oder Außenluft, die durch den Außenlufteinlass eingeführt wird, oder Innenluft, die durch den Innenlufteinlass eingeführt wird, bläst;
einen Verdampfer (103), der Außenluft oder Innenluft, die durch das Gebläse geblasen wird, abkühlt; und
einen Kondensator (104), der die Außenluft oder Innenluft, die durch den Verdampfer abgekühlt ist, erwärmt und dem Inneren des Insassenraums die erwärmte Außenluft oder Innenluft zuführt, wobei:
ein erster Strömungskanal gebildet ist, durch den Außenluft oder Innenluft in der Reihenfolge des Gebläses, des Verdampfers, des Kondensators und des Inneren des Insassenraums strömt;
ein zweiter Strömungskanal gebildet ist, der von dem ersten Strömungskanal getrennt ist, und durch den Innenluft in der Reihenfolge des Innenlufteinlasses, des Wärmetauschers und des Äußeren des Insassenraums strömt; und
der Wärmetauscher (101) Wärme zwischen Außenluft, die durch den Außenlufteinlass durch Saugkraft des Gebläses eingeführt wird, und Innenluft, die in den zweiten Kanal eingeführt wird, nachdem sie durch eine Blaskraft des Gebläses den ersten Kanal und das Innere des Insassenraums passiert, austauscht,
**dadurch gekennzeichnet, dass**
das Gebläse Innenluft, die einem Wärmeaustausch unterzogen wurde, zum Äußeren des Insassenraums unter Verwendung eines Ablaufschlauchs (202) ablässt, der bereitgestellt ist, um Abwasser zum Äußeren des Insassenraums abzulassen, wobei das Abwasser erzeugt wird, wenn Außenluft durch den Verdampfer gekühlt wird.

2. Fahrzeug-Klimaanlage nach Anspruch 1, wobei der Wärmetauscher (101) ein Tauscher von fühlbarer Wärme ist.

3. Fahrzeug-Klimaanlage nach einem der Ansprüche 1 bis 2, ferner einen Ablassschlauch (201) umfassend, der ein Ende aufweist, das mit einem Auslass für die Innenluft des Wärmetauschers verbunden ist, und ein anderes Ende aufweist, das mit dem Ablaufschlauch verbunden ist, wobei die Innenluft (D), die einem Wärmeaustausch durch den Wärmetauscher unterzogen wurde, durch den Ablassschlauch (201) und den Ablaufschlauch (202) zum Äußeren des Insassenraums abgelassen wird.

4. Fahrzeug, umfassend die Fahrzeug-Klimaanlage (200) nach einem der Ansprüche 1 bis 3.

## Revendications

1. Appareil de climatisation de véhicule (200) comprenant :
une entrée d'air extérieur (112) par laquelle l'air extérieur est introduit depuis l'extérieur d'un habitacle ;
une entrée d'air intérieur (116) par laquelle l'air intérieur est introduit depuis l'intérieur de l'habitacle ;
un échangeur thermique (101) qui échange la chaleur entre l'air intérieur introduit par l'entrée d'air intérieur et l'air extérieur introduit par l'entrée d'air extérieur ;
un ventilateur soufflant (102) qui souffle de l'air extérieur qui a été soumis à un échange thermique par l'échangeur thermique, ou l'air extérieur introduit par l'entrée d'air extérieur ou l'air intérieur introduit par l'entrée d'air intérieur ;
un évaporateur (103) qui refroidit l'air extérieur ou l'air intérieur soufflé par le ventilateur soufflant ; et
un condensateur (104) qui chauffe l'air extérieur ou l'air intérieur refroidi par l'évaporateur et envoie l'air extérieur ou l'air intérieur chauffé vers l'intérieur de l'habitacle,
un premier passage de flux étant formé par lequel l'air extérieur ou l'air intérieur circule dans l'ordre du ventilateur soufflant, de l'évaporateur, du condensateur et de l'intérieur de l'habitacle ;
un deuxième passage de flux étant formé qui est séparé du premier passage de flux, et par lequel l'air intérieur circule dans l'ordre de l'entrée d'air intérieur, de l'échangeur thermique et de l'extérieur de l'habitacle ; et
l'échangeur thermique (101) échangeant la chaleur entre l'air extérieur introduit par l'entrée d'air extérieur par la puissance d'aspiration du ventilateur soufflant et l'air intérieur introduit dans le deuxième passage après être passé par le premier passage et l'intérieur de l'habitacle par une force de soufflement du ventilateur soufflant, **caractérisé en ce que**
le ventilateur soufflant rejette l'air intérieur qui a été soumis à un échange thermique vers l'extérieur de l'habitacle au moyen d'un tuyau de vidange (202) prévu pour rejeter l'eau de vidange vers l'extérieur de l'habitacle, l'eau de vidange étant générée lorsque l'air extérieur est refroidi par l'évaporateur.

2. Appareil de climatisation de véhicule selon la revendication 1, dans lequel l'échangeur thermique (101) est un échangeur thermique sensible.

3. Appareil de climatisation de véhicule selon l'une des revendications 1 et 2, comprenant en outre un tuyau d'évacuation (201) qui présente une extrémité reliée à une sortie pour l'air intérieur de l'échangeur thermique et présente une autre extrémité reliée au tuyau de vidange, l'air intérieur (D) qui a été soumis à l'échange thermique par l'échangeur thermique étant évacué vers l'extérieur de l'habitacle par le tuyau d'évacuation (201) et le tuyau de vidange (202).

4. Véhicule comprenant l'appareil de climatisation de véhicule (200) selon l'une des revendications 1 à 3.
